# EUROPEAN PATENT SPECIFICATION

(11) **EP 2 430 918 B1**
(45) Date of publication and mention of the grant of the patent: **26.03.2014**
(21) Application number: 11181095.8
(22) Date of filing: 13.09.2011
(51) Int. Cl.: A01M 23/04, A01M 31/00

(54) **A device for signalling a presence of animals inside units for monitoring animals, and a relative monitoring unit**
Vorrichtung zur Signalisierung der Präsenz von Tieren in Einheiten zur Überwachung von Tieren und zugehöriges Überwachungssystem
Dispositif pour la signalisation de la présence d'animaux à l'intérieur d'unité pour la surveillance d'animaux et unité de surveillance correspondante

(30) Priority: 16.09.2010 IT RE20100072
(43) Date of publication of application: 21.03.2012
(73) Proprietor: O.S.D. Gruppo Ecotech S.R.L., 41011 Campogalliano (Modena) (IT)
(72) Inventor: Gaibotti, Paolo, 41011 Campogalliano (Modena) (IT)
(74) Representative: Corradini, Corrado

(56) References cited:
- DE-U1-202004 013 928
- US-A1- 2002 167 409
- US-A1- 2004 216 364

## Description

The invention concerns a device for signalling the presence, i.e. the passage or capture of animals inside animal monitoring units, and the relative monitoring unit, in particular for locating rodents or similar animals.

In greater detail, an advantageous application of the invention concerns a device for signalling the presence, or the capture of animals inside traps, and the relative trap, for locating and catching rodents or similar vermin.

A further, equally advantageous application of the invention concerns a device for signalling the presence or passage of animals inside monitoring units of a box type and the relative monitoring unit, for temporarily locating such animals, whether verminous or not, in a predetermined positioning area of the monitoring unit.

As is known, eliminating unwelcome vermin, such as rodents, for example mice, rats or the like, from environments is a significant problem in dwellings and workplaces. This is especially the case for businesses requiring a particularly rigorous level of hygiene and health control and which in this respect are subject to stringent rules (HACCP).

Workplaces of this nature, which require a high standard of control, are known to use verminous animal monitoring units for locating such animals, for example box-type traps. These traps entice the animals to enter a box body, through which the animal can pass or in which it can remain trapped.

In particular, use of an improved type of box trap is known - the multiple-catch trap - which provides two or more entry ports for animals and can catch one or more verminous animals at a time.

It is clearly highly advantageous to use this type of trap exhibiting several entry ports, since this avoids the use of poisonous substances, which are often banned within environments such as food businesses or the like. Since the traps are of the box type, they can - if the access ports are provided with no-return means - enable segregation of the captured animal within the box body, thus providing obvious advantages in terms of hygiene for the capture or monitoring environment.

However this type of trap requires periodical controls at more or less short time intervals, to ascertain whether animals are present inside the box body. To facilitate this task, devices of the type described in European Patent No. EP 1 059 031 are known, which signal the presence of animals inside animal traps for vermin.

The above-mentioned patent provides a detailed description of a first type of device for detecting animals in animal traps, which comprises a box body provided with two access ports. The access port is provided with a no-return mechanism comprising a plate which tilts on a central pivot. A switch is used to detect the presence of animals in the trap. The switch, which is activated by the lowering of the tilting plate, is connected to a circuit which signals the presence of the animals.

In this known type of device, then, each access port comprises a push-button for the opening of the port, thus also signalling entry of the captured verminous animal into the box body.

This first type of known devices is however not immune from drawbacks. Among the drawbacks is the fact that the presence of several push-buttons in the box body of the trap complicates the wiring between the said push-buttons and the signalling circuit. This is because conduits must be provided, in the box constituting the trap, for the passage of the electrical cabling connecting the various push-buttons and the circuit, and this cabling must be hidden from, and inaccessible to the animals.

Further (as described in European Patent 1 350 430, property of the owner of the previously-mentioned European Patent 1 059 031) the push-buttons must be protected by protection means, or must in any case be arranged in positions which are not directly accessible to the animals, in order to prevent push-buttons from being damaged by the animals, which would compromise their correct operation.

Therefore for this first type of known device, particular design features must be adopted when designing the traps such as to ensure that they function correctly over time.

A second type of known device which attempt in part to obviate these drawbacks is again described in European Patent No. 1 059 031. Here the detection means comprise one or more elongate elements which are activated by the animals' movements inside the traps. These elements may be arranged either vertically or horizontally.

In the first case, one end is connected to the device which is arranged on the lid of the trap and contains the detection means, while the other end remains raised slightly from the bottom, in such a way as to be activated by the movements of the animals.

In the second case, one end is connected to the edge of the trap while the other is arranged in the central area, at a height enabling it to be activated by the movements of the animals.

However this second known type of device is also not free of drawbacks, since although such devices are arranged inside the box and are interposed between the access ports of the animals into the box body, signalling of the presence of the animals depends on whether or not the animals interacts accidentally with the detection rod extending into the box. It is possible for this not to happen at all.

Consequently the signalling device would be ineffective and entail for example hygiene and health-related drawbacks caused by dead animals remaining inside the traps.

The abovementioned European Patent proposes a further solution to obviate this drawback, whereby optical means detect the presence of the animals inside the box. However, such solutions appear to be economically disadvantageous, and extremely complicated from a practical point of view.

Another type of known device, according to the preamble of Claim 1, is again described in US Patent Application No. US 2004/216364, in which the tilting mechanical means does not come in contact with the switch element.

An aim of the invention is to obviate the abovementioned drawbacks regarding presence-detection devices of a known type by designing a device for signalling the presence of animals inside animal monitoring units: the device enables the entry of such animals into the monitoring unit via each access port thereof to be detected with certainty, while at the same time reducing the space occupied by cabling and equipment protecting the detection components.

An aim of the device of the invention is to ensure a high level of detection efficiency.

A further aim of the invention is to ensure that the detection device of the invention adapts easily to, and is compatible with monitoring units, for example commercially available traps, even after the traps have been produced and marketed, thus enabling traps to be transformed - even in phases subsequent to the marketing of the traps - into improved traps, which are capable of signalling the presence of an animal.

At the same time, in the case of defective functioning, damage or wear of these components, the electronic components can be replaced without difficulty.

A further aim of the invention is to enable and to facilitate operations for cleaning and disinfecting the box, in such a way that these operations do not cause damage to the electronic components.

A further aim of the invention is to provide a structure which is simple, relatively easy to implement in practical terms, easy even for unskilled or not particularly expert operators to put in place and install, safe in use, effective in operation, and relatively inexpensive.

These aims are achieved by the characteristics of the invention as disclosed in the independent claim 1. The dependent claims delineate preferred and/or particularly advantageous aspects of the invention.

Further characteristics and advantages of the invention will emerge from the following description, which is provided by way of a non-limiting example of an embodiment thereof, with the aid of the appended figures of the drawings.
Figure 1 is an axonometric view of a trap with two access ports, which is provided internally with a device of the invention for signalling the presence of animals within it.
Figure 2 illustrates a detail of the device of figure 1.

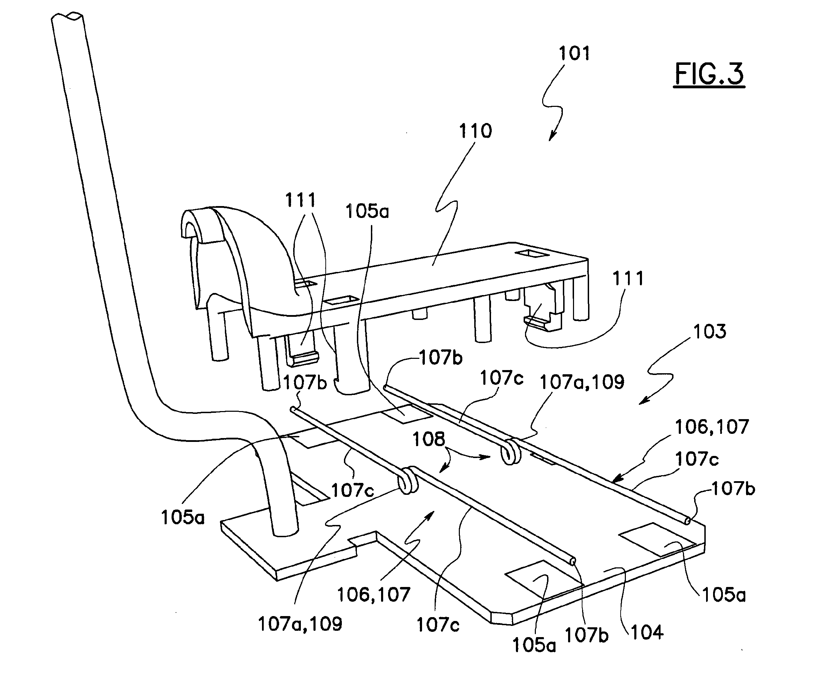

Figure 3 is an exploded view of the switch element of the signalling device of the invention.

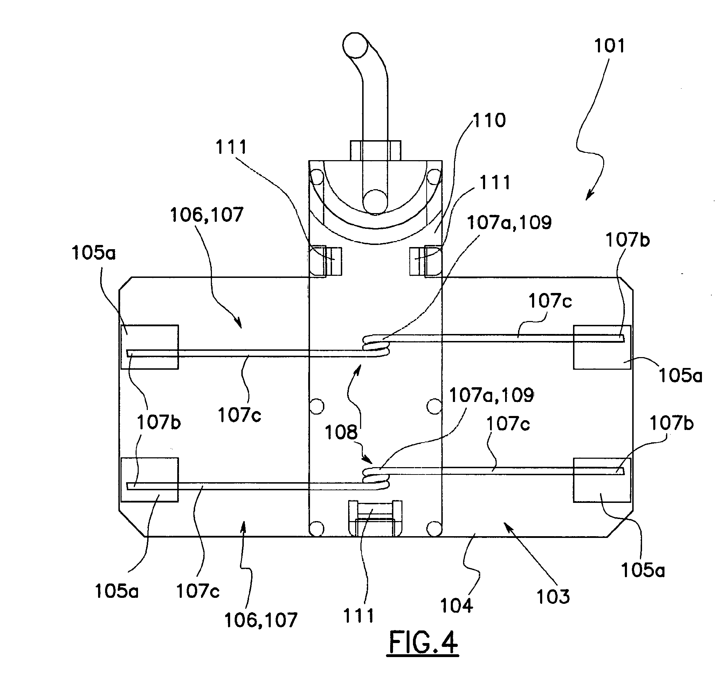

Figure 4 is a plan view from above of the switch element of figure 3.

In the figures, the numeral 1 refers to a monitoring unit for locating animals, which comprises a box body 2 destined to contain such animals.

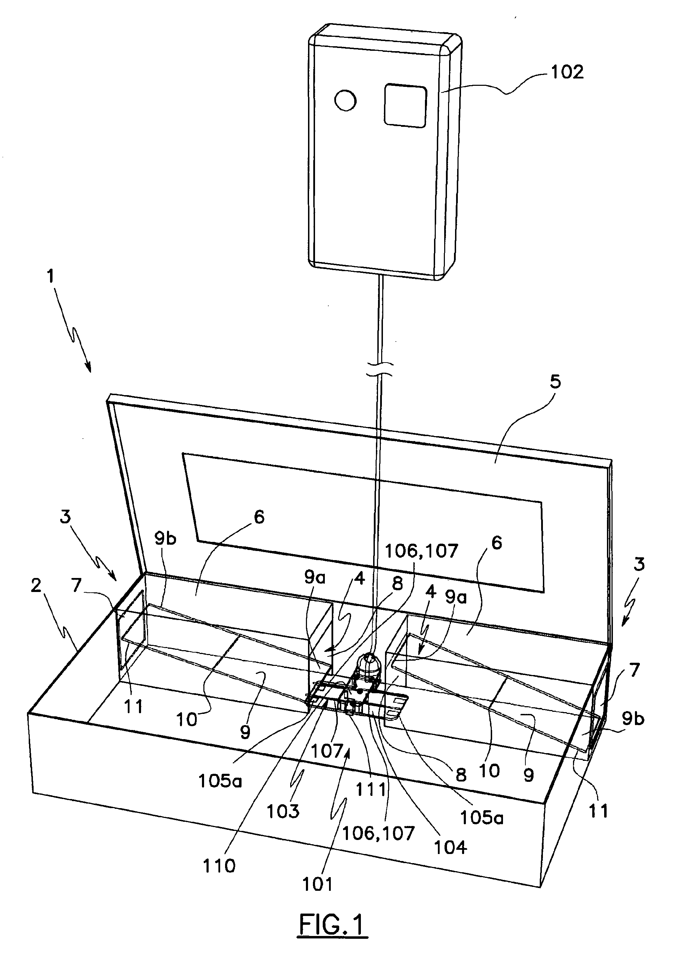

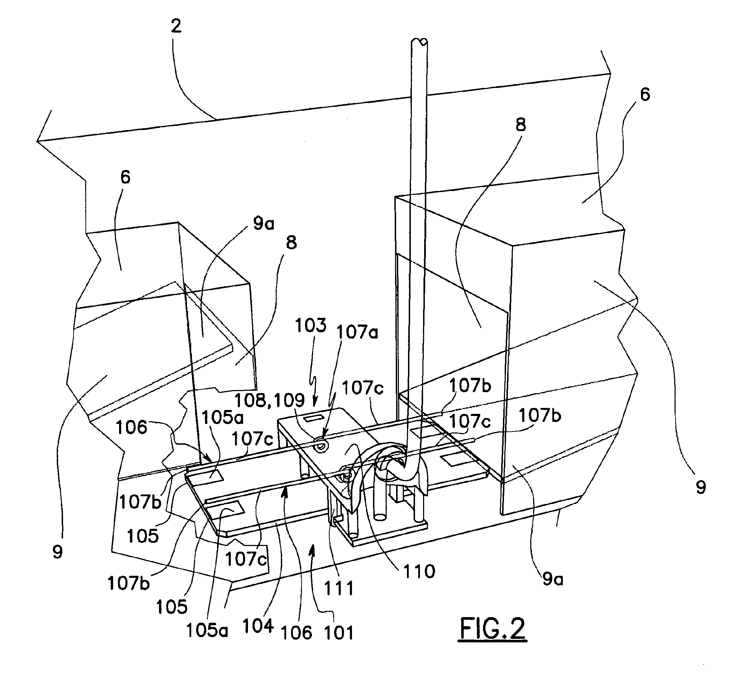

In the example shown in figures 1 and 2, the monitoring unit 1 is a trap for catching vermin. However the monitoring unit 1 can simply be destined to detect the passage of the vermin, without trapping them inside the box body 2.

The box body 2 comprises at least a pair of access ports 3 enabling animals to access the interior of the box body.

The box body 2 further comprises mechanical means 4 for opening and closing the access ports 3.

The trap 1 also comprises a lid 5 which is hinged to the box body 2 and opens and closes the box body 2.

The monitoring unit, in this particular case the trap 1, comprises a device for signalling the presence of animals within the box body 2, the device being denoted in the figures by reference numeral 101.

The device 101 comprises detection and signalling means 102, for detecting and signalling the presence of least a verminous or non-verminous animal inside the box body 2.

The detection and signalling means 102 comprise, for example, at least an electronic circuit for activating an audio or visual signalling device, or cable or wireless transmission means to transmit a presence signal, which means are associated externally to the box body 2 of the trap 1, or connected remotely to the electronic circuit.

The electronic circuit can be opened or closed by a switch element 103 which is destined to detect the presence of the animals in the box body 2 automatically and can be activated by mechanical means 4.

In particular, in relation to the aims of the invention, the device 101 comprises a switch element which can be associated internally to the box body 2.

Further, the switch element 103 is shaped in such a way as to be activated by each of the mechanical means 4 of the pair of access ports 3.

The same switch element 103 is intercepted, by contact, by each of the mechanical opening and closing means 4 of the pair of access ports 3 exhibited by the box body.

Advantageously, the switch element 103 comprises at least a plate 104 which is provided with conductive tracks 105 connecting to the electronic control circuit.

The plate 104 is removably associated to the interior of the box body 2. Purely by way of example, the plate 104 can be associated to the box body 2 using interlocking means, temporary fixing organs or can simply be rested on the bottom of the box body 2.

The tracks 105 are associated to the plate 104. They may be for example printed, silkscreen-printed or solidly associated to the plate 104 by means of any manufacturing method whatsoever, and are destined to be contacted by at least a conductive element 106, for example in such a way as to close the electronic circuit, in order to be accessible by the conductive element 106.

In the upper perimetral zone of the plate 104 the tracks 105 exhibit a contact portion 105a which is destined to be contacted by the conductive element 106.

For example, several tracks 105 may be provided and associated to the plate 104, the tracks 105 being destined to give rise to circuit branches which are in series or in parallel according to the signalling requirements and the complexity of the electronic circuit.

The conductive element 106, in particular, is mobile between a non-contact position and a configuration of contact with the tracks 105 and can be changed between these configurations by each of the mechanical means 4. Advantageously, in the embodiment shown in the figures, the conductive element 106 is associated to the plate 104.

However this does not exclude alternative and equivalent embodiments of the switch element 103, for example those in which the conductive element is solidly associated directly to the mechanical means 4 and is such as to contact the tracks 105 provided on the plate 104.

Alternatively, a plurality of conductive elements 106 can be provided, for example switches or other elements, which are supported by the plate 104 and can be activated by each of the mechanical means 4 of the respective access ports 3.

The conductive element 106 advantageously comprises at least a conductive filament 107, which is superiorly associated to the plate 104 at an intermediate zone 107a of the filament, the intermediate zone 107a being included between two ends 107b of the filament 107.

The filament 107 defines two tracts 107c which diverge from the intermediate zone 107a towards the ends 107b, and are kept separate from the plate 104 by elastic means 108.

Each of the mechanical means 4 is destined to contact one of the ends 107b of the filament 107 in order to move the respective tract 107c of the filament from the no-contact configuration to the contact configuration with the tracks 105, in opposition to the elastic means 108.

In this particular embodiment, the electronic circuit is of the type which is normally open, and which the conductive element 106 closes when the presence of a pest is detected inside the box body 2. However, this does not exclude different equivalent configurations, in which the electronic circuit is of the type which is normally closed, and is opened when the presence of a pest is detected inside the box body 2.

Advantageously, to facilitate contact of the filament 107 with the mechanical means 4, the projection of the end 107b of each of the tracts 107c of the filament 107 on the plane defined by the plate 104 is external of the plate 104.

Each of the access ports 3 of the monitoring unit 1 comprises at least a tunnel 6.

In particular, the tunnel 6 is provided with a first access mouth 7 facing towards the outside of the box body 2 and giving access to the tunnel 6, and a second access mouth 8 facing towards the interior of the box body 2 for accessing the box body 2.

The mechanical means 4 can be operated to selectively open the first and second access mouths, 7 and 8, and comprise at least an inclined plane 9, which is interposed between the first access mouth 7 and the second access mouth 8, and which is tiltingly associated to the side walls of the tunnel 6 at a substantially central pivot 10.

The first end 9a of the plane 9 is proximal to the second access mouth 8 and is in particular destined to contact the switch element 103, and even more particularly the end 107b of the tract 107c of the filament 107, which tract 107c is facing towards the second access mouth 8, at the opening of the second access mouth, i.e. where the plane 9 tilts under the effect of the passage of the animal, whether a pest or not, from the first access mouth 7 to the second access mouth 8 along the tunnel 8.

Further, if the monitoring unit is in particular a trap 1, it comprises no-return means which are destined to prevent the exit of a pest from the box body 2. The no-return means, in the particular embodiment shown in the figures, comprise at least a counterweight 11 which is associated to the plane 9 at the second end 9b of the plane 9, the second end 9b being positioned opposite with respect to the first end 9a and being arranged at the first access mouth 7 of the tunnel 6, in order to close the second access mouth 8, by means of the plane 9 tilting in the opposite direction to the direction described herein above for the opening of the second access mouth 8.

The no-return means can further comprise a flap which is hinged to the plane 9 at the first access mouth 7. This mechanism (not illustrated since of known type to a person skilled in the art) enables rotation of the plane which opens the second access mouth 8 to cause rotation of the flap, thus temporarily occluding the first access mouth 7.

If instead the monitoring unit 1 is not destined to trap the animal, but is simply a unit which is destined to detect the passage of the animal, the unit will not comprise the above-described no-return means, or possibly the box body will exhibit an exit opening for the animal.

In this way, the monitoring unit simply indicates the presence of or counts the number of passages of the animal in the area where the monitoring unit 1 is installed.

The elastic means 108 of the device 1 comprise at least a flexion spring, each compression leaf of the compression spring being formed by each tract 107c of the filament 107.

In the intermediate zone 107a the filament 107 advantageously comprises at least a coil 109 such as to increase the elastic constant of the filament 107. In particular, the filament 107 exhibits a longitudinal axis which joins the second access ports 3 of the pair of tunnels 6, and the filament 107 is interposed between the second access ports 3.

In the particular embodiment shown in the figures, the longitudinal axis of the filament 107 is arranged substantially perpendicular to the lie plane of the second access mouths 8 .

Further, in this particular embodiment, the conductive element 106 comprises a pair of conductive filaments 107, as described herein above, which are superiorly associated to the plate 104 and are arranged with their respective longitudinal axes substantially parallel, and substantially parallel to the longitudinal axis of the pair of tunnels, which tunnels face each other.

The device 1 further comprises at least a protective bridge 110 which is solidly associated to the plate 104 at the intermediate zone 107a of the filament 107, for example the area of the filament 107 interested by the coil 109, which area will thus be protected and therefore be inaccessible to an animal present in the trap 1.

Note instead that the remaining part of the filament 107, i.e. the end tracts 107c thereof, and much of the upper surface of the plate 104 are in zones which are accessible to being trod on by an animal which has entered the box body 2, without thereby giving rise to problems of damage to the plate 104.

The bridge 110 advantageously comprises engaging means 111 which engage with the plate 104 and are destined to facilitate fastening and removal of the bridge whenever it is necessary to clean the plate 104.

The monitoring unit functions as follows, with particular reference to the trap 1 and the device 101 arranged therein.

Once the animal, for example a mouse or a rat, has entered the tunnel 6 of the first access mouth 7 and passed through the tunnel 6, the tilting plane 9 begins to rotate around the pivot 10, gradually closing the first access mouth and opening the second access mouth 8.

When the animal is substantially inside the box body 2 of the trap 1, the plane 9 completes the rotation, thus completely opening the second access mouth.

In this configuration, the plane 9 contacts the end 107b of the tract 107c of the filament 107 which is proximal to the plane 9, moving the filament 107 from the non-contact configuration to the contact configuration, during the rotation of the plane, in opposition to the elastic means 108.

In the contact configuration, the normally open electronic circuit is closed by the conductive element 106 thus activating the detection and signalling means 102, which signal the presence of the animal inside the box body 2 to the operator. Once inside, the animal will be unable to leave the box body 2, which is provided with the no-return means.

The no-return means, i.e. the rising of the plane 9 caused by the counterweight 11, enables the animal to be definitively captured inside the box body 2, and they are activated at substantially the same time as the switch element 103 closes the electronic circuit.

When used as a simple detection unit without catching the animal, the monitoring unit 1 functions in the same way, the only difference being that the animal entering the box body 2 is free to leave it.

Practical experience has shown that the invention described herein achieves the set aims; it must in particular be stressed that the device for signalling the presence of animals inside the animal monitoring unit of the invention allows secure and certain detection of entry of animals into the box body of the unit via each access while at the same time reducing the space utilised for cabling and for the technical elements necessary for protecting the detection-related components.

Further, the monitoring unit exhibiting the abovementioned device has been found to be not only highly effective in terms of detecting, but also easily adapted to and compatible with commercial traps, even after they have been produced in standard formats and placed on the market. At the same time the device guarantees easy replacement of the electronic components, should they malfunction, be damaged or be worn.

Further, it has been found that when fitted to multiple-catch traps, the device facilitates box cleaning and disinfection operations, without these phases possibly causing damage to the electronic components.

The invention may exhibit numerous modifications and variants all of which are included within the ambit of the inventive step.

Further, all particulars can be replaced by other technically equivalent elements.

The materials used, as well as forms and dimensions dictated by contingent situations, may vary according to requirements and are only limited by the scope as defined by the appended claims.

## Claims

1. A device (101) for signalling a presence of animals inside monitoring units (1) for locating animals, which units (1) are of a type comprising a box body (2) destined to contain the animals and provided with at least a pair of access ports (3), and respective mechanical means (4) for opening and closing the access ports (3), the device (101) comprising detecting and signalling means (102) of a presence of at least an animal inside the box body (2), **characterised in that** the detection and signalling means (102) can be activated to open and close by means of one switch element (103) internally associable to the box body (2) and shaped such as to be activated by each of the mechanical means (4) of the pair of access ports (2); **characterised in that** the switch element (103) comprises at least a plate (104) provided with conductive tracks (105) and removably associable to an inside of the box body (2), the tracks (105) being destined to be contacted by at least a conductive element (106) which is movable between at least a no-contact configuration and a contact configuration with the tracks (105), and which is destined to be moved between the said configurations by each of the mechanical means (4); the conductive element (106) being associated to the plate (104); wherein the conductive element (106) comprises at least a conductive filament (107) which is superiorly associated to the plate (104) at an intermediate zone (107a) of the plate (104), the intermediate zone (107a) being comprised between two ends (107b) and being such as to define two tracts (107c) which diverge from the intermediate zone (107a) and which are separated from the plate (104) by elastic means (108), each of the mechanical means (4) being destined to contact at least one of the ends (107b) in order to move the respective tract of the filament (107) from the no-contact configuration to the in contact configuration, in opposition to the elastic means (108).

2. The device (101) of claim 1, **characterised in that** it comprises a plurality of conductive elements (106) which are supported by the plate (104).

3. The device (101) of claim 1, **characterised in that** a projection of the end (107b) of each tract (107c) of the filament (107) on a plane defined by the plate (104) is external to the plate (104).

4. The device (101) of claim 1 **characterised in that** the elastic means (108) comprise at least a flexion spring, each leaf of the flexion spring being formed by each of the tracts (107c) of the filament (107), the filament (107) comprising at least a coil (109) in the intermediate area (107a).

5. The device (101) of one or more of the preceding claims, **characterised in that** it comprises at least a protective bridge (110) which is solidly associated to the plate (104) at the intermediate zone (107a) of the filament (107).

6. The device (101) of claim 5, **characterised in that** the bridge (110) comprises engaging means (111) for engaging with the plate (104).

7. The device (101) of one or more of claims from 3 to 6, **characterised in that** the conductive element (106) comprises a pair of conductive filaments (107) which are superiorly associated to the plate (104) and are arranged with respective longitudinal axes thereof substantially parallel.

8. A monitoring unit (1) for locating animals, which comprises a box body (2) destined to contain the animals and provided with at least a pair of access ports (3) and mechanical means (4) for opening and closing the access ports (3), **characterised in that** it comprises at least a device (101) for signalling a presence of animals inside the box body (2) as in one or more of claims from 1 to 7.

9. The monitoring unit (1) of claim 8, **characterised in that** each of the access ports (3) comprises at least a tunnel (6) which is provided with a first access mouth (7) to the tunnel (6), and with a second access mouth (8) which faces towards the interior of the box body (2), the mechanical means (4) being activatable to selectively open the first access mouth (7) and the second (8) access mouth and comprising at least an inclined plane (9) which is interposed between the first and the second access mouths and which is tiltingly associated to lateral walls of the tunnel (6) at a central pivot (10), the first end (9a) of the plane (9), which is proximal to the second access mouth (8), being destined to contact the switch element (103) at the opening of the second access mouth (8).

10. The monitoring unit (1) of any of claims from 8 to 9, **characterised in that** it is a trap comprising no-return means which are destined to prevent an animal from leaving the box body (2).

11. The monitoring unit (1) of claims 9 and 10, **characterised in that** the no-return means comprise at least a counterweight (11) which is associated to the plane (9) at the second end (9b) thereof, and which is positioned opposite the first end, for closing the second access mouth (8).

## Patentansprüche

1. Vorrichtung (101) zum Signalisieren der Anwesenheit von Tieren in Überwachungseinheiten (1) zum Orten von Tieren, wobei die Einheiten (1) von einer Art sind, die einen Behälterkörper (2) umfasst, der dazu bestimmt ist, die Tiere zu enthalten, und mit mindestens einem Paar Zugangskanäle (3) und mit jeweiligen mechanischen Mitteln (4) zum Öffnen und Schließen der Zugangskanäle (3) ausgestattet ist, wobei die Vorrichtung (101) Mittel (102) zum Erkennen und Signalisieren der Anwesenheit mindestens eines Tieres im Inneren des Behälterkörpers (2) umfasst, **dadurch gekennzeichnet, dass** das Erkennungs- und Signalgebungsmittel (102) mit Hilfe eines Schaltelements (103) zum Öffnen und Schließen aktiviert werden kann, wobei das Schaltelement dem Inneren des Behälterkörpers (2) angebracht werden kann und derart geformt ist, dass es durch jedes der mechanischem Mittel (4) des Paares von Zugangskanälen (2) aktiviert werden kann, **dadurch gekennzeichnet, dass** das Schaltelement (103) mindestens eine Platte (104) umfasst, die mit leitenden Schienen (105) ausgestattet und entnehmbar in einem Inneren des Behälterkörpers (2) angebracht werden kann, wobei die Schienen (105) dazu bestimmt sind, von mindestens einem leitfähigen Element (106) kontaktiert zu werden, das zwischen mindestens einer Kein-Kontakt-Gestaltung und einer Kontakt-Gestaltung mit den Schienen (105) beweglich ist und das dazu bestimmt ist, durch jedes der mechanischen Mittel (4) zwischen den Gestaltungen bewegt zu werden, wobei das leitfähige Element (106) an der Platte (104) angebracht ist, wobei das leitfähige Element (106) mindestens ein leitfähiges Filament (107) umfasst, das in einem Mittelbereich (107a) der Platte (104) oben auf der Platte (104) angebracht ist, wobei der Mittelbereich (107a) zwischen zwei Enden (107b) enthalten ist und derart ist, dass er zwei Abschnitte (107c) definiert, die vom Mittelbereich (1 07a) nach außen verlaufen und die durch elastische Mittel (108) von der Platte (104) getrennt sind, wobei jedes der mechanischen Mittel (4) dazu bestimmt ist, mindestens eines der Enden (107b) zu kontaktieren, um den entsprechenden Abschnitt des Filaments (107), dem elastischen Mittel (108) entgegen, aus der Kein-Kontakt-Gestaltung in die Kontakt-Gestaltung zu bewegen.

2. Vorrichtung (101) nach Anspruch 1, **dadurch gekennzeichnet, dass** sie mehrere leitfähige Elemente (106) umfasst, die von der Platte (104) getragen werden.

3. Vorrichtung (101) nach Anspruch 1, **dadurch gekennzeichnet, dass** ein Vorsprung am Ende (107b) jedes Abschnitts (107c) des Filaments (107) auf einer durch die Platte (104) definierten Ebene außerhalb der Platte (104) liegt.

4. Vorrichtung (101) nach Anspruch 1, **dadurch gekennzeichnet, dass** die elastischen Mittel (108) mindestens eine Biegefeder umfassen, wobei jeder Flügel der Biegefeder von einem der Abschnitte (107c) des Filaments (107) gebildet wird, wobei das Filament (107) im Mittelbereich (107a) mindestens eine Windung (109) umfasst.

5. Vorrichtung (101) nach einem oder mehreren der vorhergehenden Ansprüche, **dadurch gekennzeichnet, dass** sie mindestens eine Schutzbrücke (110) umfasst, die im Mittelbereich (107a) des Filaments (107) fest an der Platte (104) angebracht ist.

6. Vorrichtung (101) nach Anspruch 5, **dadurch gekennzeichnet, dass** die Brücke (110) Eingriffsmittel (111) für den Eingriff in die Platte (104) umfasst.

7. Vorrichtung (101) nach einem oder mehreren der Ansprüche 3 bis 6, **dadurch gekennzeichnet, dass** das leitfähige Element (106) ein Paar leitfähiger Filamente (107) umfasst, die oben auf der Platte (104) angebracht sind und im Verhältnis zu deren Längsachse im Wesentlichen parallel angeordnet sind.

8. Überwachungseinheit (1) zum Orten von Tieren, die einen Behälterkörper (2) umfasst, der dazu bestimmt ist, die Tiere zu enthalten, und mit mindestens einem Paar Zugangskanälen (3) und mit mechanischen Mitteln (4) zum Öffnen und Schließen der Zugangskanäle (3) ausgestattet ist, **dadurch gekennzeichnet, dass** sie mindestens eine Vorrichtung (101) zum Signalisieren der Anwesenheit von Tieren im Inneren des Behälterkörpers (2) nach einem oder mehreren der Ansprüche 1 bis 7 umfasst.

9. Überwachungseinheit (1) nach Anspruch 8, **dadurch gekennzeichnet, dass** jeder der Zugangskanäle (3) mindestens einen Tunnel (6) umfasst, der mit einer ersten Zugangsöffnung (7) zum Tunnel (6) ausgestattet ist und mit einer zweiten Zugangsöffnung (8), die dem Inneren des Behälterkörpers (2) zugewandt ist, wobei die mechanischen Mittel (4) aktiviert werden können, um wahlweise die erste Zugangsöffnung (7) und die zweite Zugangsöffnung (8) zu öffnen, und mindestens eine geneigte Ebene (9) umfassen, die zwischen der ersten und der zweiten Zugangsöffnung eingefügt und um eine mittige Drehachse (10) schwenkbar an Seitenwänden des Tunnels (6) angebracht ist, wobei das erste Ende (9a) der Ebene (9), die nahe der zweiten Zugangsöffnung (8) liegt, dazu bestimmt ist, das Schaltelement (103) an der Öffnung der zweiten Zugangsöffnung (8) zu kontaktieren.

10. Überwachungseinheit (1) nach Anspruch 8 oder 9, **dadurch gekennzeichnet, dass** sie eine Falle ist, die Nicht-Rückkehr-Mittel umfasst, die dazu bestimmt sind zu verhindern, dass ein Tier den Behälterkörper (2) verlässt.

11. Überwachungseinheit (1) nach Anspruch 9 und 10, **dadurch gekennzeichnet, dass** die Nicht-Rückkehr-Mittel mindestens ein Gegengewicht (11) umfassen, das am zweiten Ende (9b) der Ebene (9) an dieser angebracht ist und das gegenüber dem ersten Ende angeordnet ist, um die zweite Zugangsöffnung (8) zu schließen.

## Revendications

1. Dispositif (101) de signalisation de la présence d'animaux à l'intérieur d'unités de surveillance (1) pour la localisation d'animaux, lesdites unités (1) étant d'un type comprenant un corps de boîte (2) destiné à contenir les animaux et pourvu d'au moins une paire d'orifices d'accès (3), et des moyens mécaniques respectifs (4) pour ouvrir et fermer les orifices d'accès (3), le dispositif (101) comprenant des moyens de détection et de signalisation (102) de la présence d'au moins un animal à l'intérieur du corps de boîte (2), **caractérisé en ce que** les moyens de détection et de signalisation (102) peuvent être activés pour commander l'ouverture et la fermeture à l'aide d'un élément commutateur (103) associable de manière interne au corps de boîte (2) et conformé de manière à être activé par chacun des moyens mécaniques (4) de la paire d'orifices d'accès (2) ; **caractérisé en ce que** l'élément commutateur (103) comprend au moins une plaque (104) pourvue de pistes conductrices (105) et associable de manière amovible à l'intérieur du corps de boîte (2), les pistes (105) étant destinées à être mises en contact avec au moins un élément conducteur (106) qui peut se déplacer entre au moins une configuration sans contact et une configuration en contact avec les pistes (105), et qui est destiné à être déplacé entre lesdites configurations par chacun des moyens mécaniques (4) ; l'élément conducteur (106) étant associé à la plaque (104) ; dans lequel l'élément conducteur (106) comprend au moins un filament conducteur (107) qui est associé supérieurement à la plaque (104) dans une zone intermédiaire (107a) de la plaque (104), la zone intermédiaire (107a) étant comprise entre deux extrémités (107b) et étant telle qu'elle définit deux régions (107c) qui divergent de la zone intermédiaire (107a) et qui sont séparées de la plaque (104) par des moyens élastiques (108), chacun des moyens mécaniques (4) étant destiné à entrer en contact avec au moins l'une des extrémités (107b) de manière à déplacer la région respective du filament (107) depuis la configuration sans contact jusqu'à la configuration en contact, en opposition aux moyens élastiques (108).

2. Dispositif (101) selon la revendication 1, **caractérisé en ce qu'**il comprend une pluralité d'éléments conducteurs (106) qui sont supportés par la plaque (104).

3. Dispositif (101) selon la revendication 1, **caractérisé en ce qu'**une projection de l'extrémité (107b) de chaque région (107c) du filament (107) sur un plan défini par la plaque (104) est externe à la plaque (104).

4. Dispositif (101) selon la revendication 1, **caractérisé en ce que** les moyens élastiques (108) comprennent au moins un ressort de flexion, chaque lame du ressort de flexion étant formée par chacune des régions (107c) du filament (107), le filament (107) comprenant au moins un enroulement (109) dans la zone intermédiaire (107a).

5. Dispositif (101) selon une ou plusieurs des revendications précédentes, **caractérisé en ce qu'**il comprend au moins un pont protecteur (110) qui est solidement associé à la plaque (104) dans la zone intermédiaire (107a) du filament (107).

6. Dispositif (101) selon la revendication 5, **caractérisé en ce que** le pont (110) comprend des moyens d'engagement (111) pour s'engager avec la plaque (104).

7. Dispositif (101) selon une ou plusieurs des revendications 3 à 6, **caractérisé en ce que** l'élément conducteur (106) comprend une paire de filaments conducteurs (107) qui sont associés supérieurement à la plaque (104) et sont agencés de telle sorte que leurs axes longitudinaux respectifs sont sensiblement parallèles.

8. Unité de surveillance (1) pour localiser des animaux, comprenant un corps de boîte (2) destiné à contenir les animaux et pourvu d'au moins une paire d'orifices d' accès (3) et de moyens mécaniques (4) pour ouvrir et fermer les orifices d'accès (3), **caractérisée en ce qu'**elle comprend au moins un dispositif (101) pour signaler la présence d'animaux à l'intérieur du corps de boîte (2) selon une ou plusieurs des revendications 1 à 7.

9. Unité de surveillance (1) selon la revendication 8, caractérisée en ce chacun des orifices d'accès (3) comprend au moins un tunnel (6) pourvu d'une première bouche d'accès (7) au tunnel (6), et avec une deuxième bouche d'accès (8) orientée vers l'intérieur du corps de boîte (2), les moyens mécaniques (4) pouvant être activés pour ouvrir sélectivement la première bouche d'accès (7) et la deuxième bouche d'accès (8), et comprenant au moins un plan incliné (9) qui est interposé entre les première et deuxième bouches d'accès et qui est associé de manière basculante à des parois latérales du tunnel (6) autour d'un pivot central (10), la première extrémité (9a) du plan (9), proximale de la deuxième bouche d'accès (8), étant destinée à entrer en contact avec l'élément commutateur (103) lors de l'ouverture de la deuxième bouche d'accès (8).

10. Unité de surveillance (1) selon l'une quelconque des revendications 8 à 9, **caractérisée en ce qu'**elle constitue un piège comprenant des moyens de non-retour qui sont destinés à éviter qu'un animal ne sorte du corps de boîte (2).

11. Unité de surveillance (1) selon les revendications 9 et 10, **caractérisée en ce que** les moyens de non-retour comprennent au moins un contrepoids (11) qui est associé au plan (9) à la deuxième extrémité (9b) de celui-ci, et qui est positionné de manière opposée à la première extrémité pour fermer la deuxième bouche d'accès (8).
